# EUROPÄISCHE PATENTANMELDUNG

(11) **EP 0 779 762 A2**
(43) Veröffentlichungstag der Anmeldung: **18.06.1997**
(21) Anmeldenummer: 96402724.7
(22) Anmeldetag: 12.12.1996
(51) Int. Cl.: H04Q 11/04

(54) **Verfahren zum Aufbau einer Mehrkanalverbindung sowie Vermittlungseinrichungen, Kommunikationsnetz, sendeseitige und empfangsseitige Zugangseinrichtung zu einem Kommunikationsnetz**

(30) Priorität: 16.12.1995 DE 19547109
(71) Anmelder: ALCATEL ALSTHOM COMPAGNIE GENERALE D'ELECTRICITE, 75008 Paris (FR)
(72) Erfinder: Willmann, Gert, 70184 Stuttgart (DE); Conradt, Johannes, 71640 Ludwigsburg (DE); Staiger, Wolfgang, 72827 Wannweil (DE)
(74) Vertreter: Knecht, Ulrich Karl, Dipl.-Ing.

(57) **Zusammenfassung**

Die Erfindung betrifft ein Verfahren zum Aufbau einer aus N Kanälen bestehenden Mehrkanalverbindung, zwei Vermittlungseinrichtungen, ein Kommunikationsnetz sowie eine sendeseitige und eine empfangsseitige Zugangseinrichtung zu einem Kommunikationsnetz. Beim Aufbau einer Mehrkanalverbindung (SLOT3, SLOT7; SLOT5, SLOT28) durch eine Koppelanordnung (DSN) werden zuerst die Transitzeiten (T1, T2, T3) von mehr als N Kanälen durch die Koppelanordnung (DSN) ermittelt (MONIT). Dannach werden aus diesen mehr als N Kanälen N Kanäle mittels eines Algorithmus ausgewählt (CONTR), der die ermittelten Transitzeiten (T1, T2, T3) als Eingangswerte verwendet. Daraufhin werden die ausgewählten N Kanäle als Kanäle der Mehrkanalverbindung (SLOT3, SLOT7; SLOT5, SLOT28) zugeordnet und die Kanäle entsprechend der ermittelten Transitzeiten (T1, T2, T3) für die Synchronisation verzögert. Dieses Verfahren ist auch auf End-zu-End-Mehrkanalverbindungen und Einkanalverbindungen anwendbar.

## Beschreibung

Die Erfindung betrifft ein Verfahren zum Aufbau einer aus N Kanälen bestehenden Mehrkanalverbindung, Vermittlungseinrichtungen für ein Kommunikationsnetz, ein Kommunikationsnetz sowie eine sendeseitige und eine empfangsseitige Zugangseinrichtung zu einem Kommunikationsnetz.

Bei Mehrkanalverbindungen stellen sich im Gegensatz zu "normalen" Verbindungen ganz spezielle Synchronisationsanforderungen. Diese Anforderungen lassen sich beispielsweise bei der in Fernsprechnetzen üblichen Zeitmultiplex-Übertragung (32 Kanäle, Zeitrahmen von 125µs) wie folgt beschreiben:
1. Die Reihenfolge der Kanäle innerhalb des Rahmens muß gewahrt bleiben.
2. Die einer Mehrkanalverbindung zugeordneten Kanäle müssen zueinander zeitlich synchron sein, d.h. die PCM-Wörter (PCM = Puls Code Modulation) aller Kanäle der Mehrkanalverbindungen müssen sowohl beim Sender als auch beim Empfänger jeweils einem einzigen Rahmen angehören.

Probleme bei der Erfüllung der zweiten Synchronisationsanforderungen ergeben sich dadurch, daß die Transitzeiten unterschiedlicher Wege durch ein Koppelnetz im allgemeinen nicht übereinstimmen. Diese Abweichungen ergeben sich durch die Umsetzung von Kanälen in den Zeitstufen des Koppelnetzes.

Die Erfindung geht nun von einem bekannten Lösungsansatz für die Erfüllung dieser Synchronisationsanforderungen aus, der beispielsweise in der Europäischen Patentschrift EP 85 110 673.2 beschrieben ist.

Die Kanäle einer Mehrkanalverbindung werden wie Einzelkanäle durch das Koppelnetz einer Vermittlungsstelle geleitet. Hinter dem Koppel netz wird ein Puffer vorgesehen, mittels dem die Kanäle der Mehrkanalverbindung synchronisiert werden. Die für die Synchronisation notwendige Verzögerung einzelner Kanäle wird hierbei mittels der Übertragung von Rahmennummern in den einzelnen Kanälen ermittelt.

Diese Lösung hat den Nachteil, daß unter Umständen ein großer ausgangsseitiger Puffer benötigt wird.

Weitere Lösungsansätze sind aus der Amerikanischen Patentschrift US 51 36 578 bekannt:

Eine erster weitere Lösungsansatz ist, die Kanäle einer Mehrkanalverbindung bereits in jeder Koppelnetzstufe zu synchronisieren. Hierfür wird in jeder Zeitstufe ein Rahmen zusätzlich zwischengespeichert. Diese Lösung hat den Nachteil, daß sich die Transitzeit durch das Koppelnetz in etwa verdoppelt.

Ein zweiter weiterer Lösungsansatz besteht darin, in jeder Zeitstufe eines Koppelnetzes spezielle Zuordnungsvorschriften zwischen eingangs- und ausgangsseitigen Kanälen vorzusehen und somit einen Zeitversatz zwischen verschiedenen durch das Koppel netz geschalteten Kanälen möglichst zu vermeiden. Durch diesen Lösungsvorschlag wird der erforderliche Synchronisationspuffer zwar reduziert, die Wegewahl innerhalb des Koppelelements wird jedoch eingeschränkt und es sind spezielle Koppelelemente erforderlich.

Der Erfindung liegt die Aufgabe zugrunde, das Transitzeitverhalten einer Ein- oder Mehrkanalverbindung zu verbessern.

Die Aufgabe wird gelöst durch ein Verfahren zum Aufbau einer Mehrkanalverbindung in einem Kommunikationsnetz nach der Lehre von Anspruch 1 sowie durch zwei Vermittlungseinrichtungen, ein Kommunikationsnetz, eine sendeseitige Zugangseinrichtung und eine empfangsseitige Zugangseinrichtung nach der Lehre von Anspruch 8, 14, 11, 12 bzw. 13.

Der Erfindung liegt der Gedanke zugrunde, beim Aufbau einer aus N Kanälen bestehenden Mehrkanalverbindung die Transitzeiten von mehr als N Kanälen zu bestimmen, aus diesen mehr als N Kanälen mittels dieser Transitzeiten N Kanäle auszuwählen und sodann diese N Kanäle der Mehrkanalverbindung zuzuordnen. Diese Auswahl folgt hierbei bestimmten vorgegebenen Kriterien. Es werden beispielsweise die N Kanäle mit der kürzesten Transitzeit oder der geringsten Transitzeitdifferenz ausgewählt. Durch die Verwendung dieser ausgewählten Kanäle für die Mehrkanalverbindung ergibt sich eine Verringerung der Gesamt-Transitzeit der Mehrkanalverbindung bzw. eine Verringerung der Größe des benötigten Synchronisationspuffers.

Es ist auch möglich, diesen Grundgedanken auf den Aufbau von Einkanalverbindungen zu übertragen, d. h. die Transitzeiten von mehreren Kanälen zu bestimmen und aus diesen denjenigen auszuwählen, der vorgegebenen Kriterien am besten entspricht. Solche Kriterien sind beispielsweise die Auswahl des Kanals mit der kürzesten Transitzeit oder die Auswahl des Kanals, dessen Transitzeit einer vorgegebenen Transitzeit am nächsten kommt. Das im folgenden zu Mehrkanalverbindungen gesagte ist somit analog auf Einkanalverbindungen anwendbar.

Die Erfindung ist zusammen mit allen oben beschriebenen Lösungsansätzen, vorzugsweise mit dem ersten Lösungansatz verwendbar. Weiter ist es möglich, die Erfindung nicht nur zum Schalten von Mehrkanalverbindungen in einem Koppel netz zu verwenden, sondern auch beim Schalten aller sonstigen Mehrkanalverbindungen in Kommunikationsnetzen einzusetzen. Solche Anwendungen sind insbesondere das Schalten von Mehrkanalverbindungen auf einer höheren Kommunikationsschicht nach dem ISO-Referenzmodell innerhalb eines Kommunikationsnetzes oder das Schalten einer Ende-zu-Ende-Mehrkanalverbindung durch ein Kommunikationsnetz.

Vorteilhafte Ausgestaltungen der Erfindung sind den Unteransprüchen zu entnehmen.

Weitere Vorteile der Erfindung ergeben sich nach den vorbestimmten Auswahlkriterien und bestehen insbesondere in einer Verringerung des notwendigen Synchronisationspuffers und einer Verringerung der Gesamt-Transitzeit einer Mehrkanalverbindung. Neben einer Verringerung der mittleren Gesamt-Transitzeit hat die Erfindung hierbei vor allem den Vorteil, daß die höheren Quantile (95%, 99%, ..) der Gesamt-Transitzeit in hohem Maße verringert werden. Dieser Effekt ist bei Einkanalverbindungen besonders ausgeprägt.

Als weiterer vorteilhafter Wirkung ergibt sich eine gleichmäßigere Koppelnetzauslastung, so daß sich die zulässige Auslastung des Koppelnetzes erhöht.

Im folgenden wird die Erfindung anhand dreier Ausführungsbeispiele unter Zuhilfenahme beiliegender Zeichnungen näher erläutert.
- Fig. 1: zeigt ein Blockschaltbild einer erfindungsgemäßen Vermittlungseinrichtung für ein erstes Ausführungsbeispiel.
- Fig. 2: zeigt ein Zeitdiagramm eines Verbindungsaufbaus in der Vermittlungseinrichtung nach Fig. 1.
- Fig. 3: zeigt ein Blockschaltbild einer erfindungsgemäßen Vermittlungseinrichtung für ein zweites Ausführungsbeispiel.
- Fig. 4: zeigt ein Blockschaltbild einer Kommunikationsanordnung für ein drittes Ausführungsbeispiel.

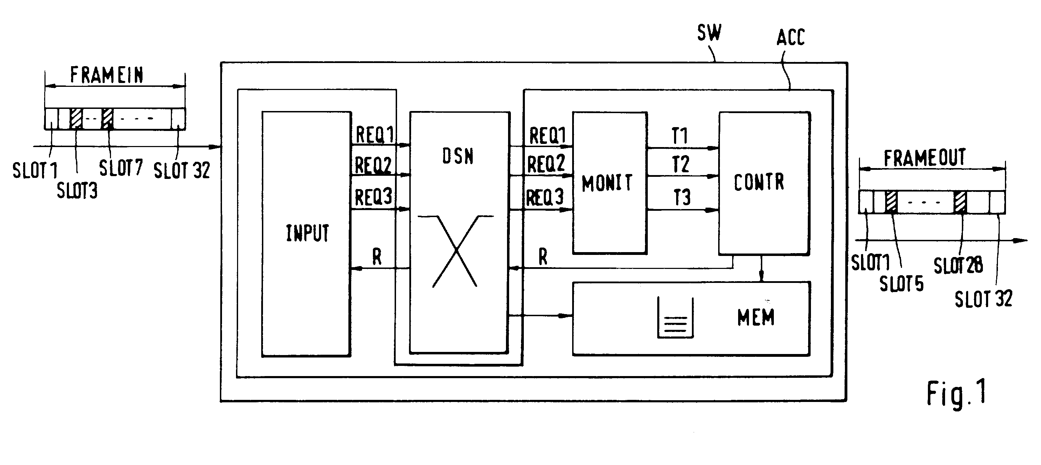

In einem ersten Ausführungsbeispiel wird die Durchführung des erfindungsgemäßen Verfahrens zum Aufbau einer Mehrkanalverbindung in einer erfindungsgemäßen Vermittlungseinrichtung beschrieben. Fig. 1 zeigt eine Vermittlungseinrichtung SW mit einer Koppelanordnung DSN und einer Zugangseinheit ACC. Der Zugang zu der Koppelanordnung DSN erfolgt über die Zugangseinheit ACC.

Die Vermittlungseinrichtung SW stellt Raum- und Zeit-Koppelfunktionen zur Verfügung und verfügt so über eine Vielzahl von PCM-Eingangs- und PCM-Ausgangsleitungen die jeweils über 32 Zeitkanäle verfügen. Der Aufbau einer solchen Vermittlungseinrichtung und insbesondere der Koppelanordnung DSN kann beispielhaft dem Artikel "System 12 Digital-Koppelnetz" von J.M. Cotton et al, Elektrisches Nachrichtenwesen Band 56, Nr. 2/3, 1981 entnommen werden. Das dort beschriebene digitale Koppelnetz entspricht hierbei der Koppelanordnung DSN.

Es ist jedoch auch möglich, daß die Vermittlungseinrichtung SW anders aufgebaut ist und insbesondere beispielsweise nur Zeit-Koppelfunktionen wahrnimmt oder eine andere Anzahl von Zeitkanälen pro Eingangs- oder Ausgangsleitung vermittelt. Die Vermittlungseinrichtung SW kann der Vermittlung von Sprache oder von Daten dienen, es kann sich jedoch auch um eine Vermittlungseinrichtung eines Cross Connects handeln.

Stellvertretend für die Vielzahl der Eingangs- und Ausgangsleitungen ist in Fig. 1 ein Zeitrahmen FRAMEIN mit 32 Zeitkanälen SLOT1 bis SLOT32 bzw. ein Zeitrahmen FRAMEOUT, ebenfalls mit den 32 Zeitkanälen SLOT1 bis SLOT32, gezeigt. Jeweils zwei dieser Kanäle, die Kanäle SLOT3 und SLOT7 bzw. die Kanäle SLOT5 und SLOT28 sind besonders gekennzeichnet. Bei ihnen handelt es sich um die einer Mehrkanalverbindung zugeordneten Kanälen. Diese Kanäle werden durch die Vermittlungseinrichtung SW vermittelt, wobei für diese Kanäle der Mehrkanalverbindung das Erfordernis besteht, daß sie in der Vermittlungseinrichtung SW um die gleiche Zeitdauer verzögert werden und somit bei der Vermittlung durch die Vermittlungseinrichtung SW ihre Synchronität gewahrt bleibt.
Bei der Koppelanordnung DSN handelt es sich um ein selbst-wegesuchendes digitales Koppel netz, das über mehrere Koppelnetzstufen verfügt und sowohl Raum- als auch Zeit-Stufen enthält. Im Gegensatz zu der Darstellung in Fig. 1 ist es hierbei auch möglich, daß es sich nicht um eine gestreckte Koppelanordnung sondern um eine Umkehr-Koppelanordnung handelt. Ein möglicher detaillierter Aufbau einer solchen Koppelanordnung kann beispielsweise dem oben angeführten Artikel entnommen werden.

Die Zugangseinheit ACC weist eine Eingangseinrichtung INPUT, eine Steuereinrichtung CONTR, eine Speichereinrichtung MEM und eine Meßeinrichtung MONIT auf.

Die Eingangseinrichtung INPUT ist für eine oder für mehrere Eingangsleitungen zuständig. Sie erkennt eine über diese Eingangsleitungen ankommende Anforderung zum Aufbau einer Mehrkanalverbindung durch die Vermittlungseinrichtung SW und leitet den dafür notwendigen Verbindungsaufbau durch die Koppelanordnung DSN ein. Die Signalisierung einer solchen Mehrkanalverbindung erfolgt hierbei beispielsweise über das Nummer 7 Signalisierungsprotokoll, in dem drei verschiedene Arten von Mehrkanalverbindungen spezifiziert sind:
- H0: 6 Kanäle à 64kbit/s
- H11: 24 Kanäle à 64kbit/s
- H12: 30 Kanäle à 64kbit/s

Es ist jedoch auch möglich, daß eine solche Mehrkanalverbindung eine beliebige Zahl zwischen 2 und 30 Kanälen in einem Zeitrahmen mit 32 Kanälen umfaßt. Bei einer entsprechend größeren Zahl von Zeitkanälen kann eine Mehrkanalverbindung eine entsprechend höhere Zahl von Zeitkanälen umfassen. In diesem Ausführungsbeispiel wurde beispielhaft der einfachste Fall gewählt, daß eine Mehrkanalverbindung aus zwei Zeitkanälen besteht.

Nach dem Erkennen der Anforderung zum Aufbau einer die Kanäle SLOT3 und SLOT7 umfassenden Mehrkanalverbindung leitet die Eingangseinrichtung INPUT den Aufbau von drei Verbindungen durch die Koppelanordnung DSN ein, indem sie drei Verbindungsanforderungen REQ1 bis REQ3 an die Koppelanordnung DSN sendet.

Es ist auch möglich, anstatt eines zusätzlichen Kanals zwei oder mehr zusätzliche Kanäle durch das Koppelnetz aufzubauen. Die Wahl der Anzahl der zusätzlichen Kanäle ist unter anderem abhängig von der Anzahl der Kanäle der Mehrkanalverbindung. Generell gilt hierbei die Regel, daß bei einer Mehrkanalverbindung mit einer hohen Zahl von Kanälen mehr zusätzliche Kanäle als bei einer solchen mit einer geringen Zahl von Kanälen notwendig sind. Bereits bei einer geringen Zahl von zusätzlichen Kanälen (ein bis zwei) wird hierbei der größte Teil des maximal möglichen quantitativen Vorteils realisiert.

Es ist weiter möglich, daß die Anzahl der zusätzlichen Kanäle abhängig von der Anzahl der Kanäle der angeforderten Mehrkanalverbindung von der Eingangseinrichtung INPUT bestimmt wird. Die Anzahl der zusätzlichen Kanäle kann auch mittels eines Regelungsalgorithmuses bestimmt werden, der auf Eingangsgrößen wie die Verkehrsbelastung der Vermittlungseinrichtung SW oder die derzeitigen Transitzeiten durch die Koppelanordnung DSN basiert

Die Meßeinrichtung MONIT entnimmt den Verbindungsanforderungen REQ1 bis REQ3, die sich durch die selbst-wegesuchende Koppelanordnung DSN "gebohrt" haben, d.h. die einen Weg durch die Koppelanordnung DSN aufgebaut haben, die von der Eingangseinrichtung INPUT in diesen vermerkten Zeitmarken und bestimmt aus diesen eine jeweilige Transitzeit T1 bis T3 für die durch die Verbindungsanforderungen REQ1 bis REQ3 aufgebauten Kanäle. Die Transitzeiten T1 bis T3 werden hierbei entweder durch Vergleich der Zeitmarken mit einer aktuellen Zeitquelle berechnet, oder die Zeitmarken dienen an sich als Maß für die Transitzeit. Die derart ermittelten Transitzeiten T1 bis T3 werden an die Steuereinrichtung CONTR weitergeleitet.

Die Steuereinrichtung CONTR ist für die Auswahl derjenigen Kanäle der Koppelanordnung DSN zuständig, über die die Mehrkanalverbindung geleitet wird. Sie arbeitet hierfür einen bestimmten Algorithmus ab, der diese Auswahl im Hinblick auf bestimmte vorgegebene Kriterien trifft.
Ein solches Kriterium ist, die Verzögerungszeit der durch die Koppelanordnung DSN aufzubauenden Mehrkanalverbindung möglichst gering zu halten. Um dieses Kriterium zu erfüllen vergleicht der Algorithmus die Transitzeiten T1 bis T3 der drei aufgebauten Kanäle miteinander und wählt diejenigen zwei Kanäle aus, die über die geringsten Transitzeiten verfügen.

Ein anderes mögliches Kriterium ist, den benötigten Verzögerungspuffer möglichst zu minimieren. Hierzu vergleicht der Algorithmus die Transitzeiten T1 bis T3 der drei aufgebauten Kanäle paarweise miteinander und wählt aus den in diesem Fall drei möglichen Kombinationen diejenige aus, bei der die geringste Differenz der Transitzeiten vorliegt.

Besteht eine Mehrkanalverbindung aus zwei oder mehreren Gruppen unterschiedlicher Kanäle, beispielsweise bei einer Bildfernsprechverbindung, die über einen schmalbandigen Sprachkanal und einen breitbandigen Video-Kanal verfügt, so kann der Algorithmus zum Erreichen dieses Kriteriums wie folgt modifiziert werden:

Es werden sowohl mehr Breitband als auch Schmalband-Kanäle als notwendig durch die Koppelanordnung DSN aufgebaut. Der Algorithmus überprüft alle möglichen Kombinationen von Schmalband- und Breitband-Kanälen darauf, bei welcher Kombination die Transitzeit der Breitband-Verbindung größer als die Transitzeit der Schmalband-Verbindung ist. Von den Kombinationen, bei denen dieses Merkmal zutrifft, wählt er anschließend diejenige aus, bei der die Differenz der Transitzeit zwischen Breit- und Schmalbandkanal am geringsten ist. Dieser Vorgehensweise liegt der Gedanke zugrunde, daß wenn immer möglich der schmalbandigere Kanal zu verzögern ist, da dadurch weniger Verzögerungspuffer benötigt wird.

Ein weiteres mögliches Kriterium ist ein möglichst gleichmäßige Differenz zwischen den Transitzeiten der Kanäle, insbesondere wenn die Differenzen zwischen den Transitzeiten die Rahmendauer nicht übersteigen. Dies kann für die nachfolgende Bearbeitung von über die Mehrkanalverbindung übertragenen Daten von Vorteil sein.

Es ist auch möglich, daß der Algorithmus die Auswahl der Kanäle in bezug auf mehrere der oben genannten Kriterien optimiert. Dies ist insbesondere bei Mehrkanalverbindungen sinnvoll, die aus einer größeren Anzahl von Einzelkanälen bestehen.

Ist die Auswahl von zwei Kanälen aus den aufgebauten drei Kanälen erfolgt, so sendet die Steuereinrichtung CONTR eine Nachricht R durch die Koppelanordnung, die den nicht ausgewählten Kanal wieder abbaut. Diese Nachricht wird schließlich von der Eingangseinrichtung INPUT empfangen, die mit Hilfe dieser Nachricht die Zuordnung der Kanäle der Mehrkanalverbindung zu den ausgewählten Kanälen vornimmt. Desweiteren ermittelt die Steuereinrichtung CONTR die Differenz der Transitzeiten der beiden ausgewählten Kanäle und sendet ein Steuersignal mit diesem Wert und einer Kennung für den zu verzögernden Kanal an die Speichereinrichtung MEM.

Die Speichereinrichtung MEM enthält einen Pufferspeicher, der zur Verzögerung von einem oder mehreren Kanälen dient. Sie besteht so aus einer Steuerschaltung, die die notwendigen Speichermanagementfunktionen wahrnimmt und Speicherschaltungen, die den Pufferspeicher hardwaremäßig realisieren. Auf ein Steuersignal von der Steuereinrichtung CONTR, das die zu verzögernden Kanäle und die jeweilige Verzögerungszeit enthält, richtet sie entsprechende virtuelle Warteschlangen in dem Pufferspeicher ein und verzögert hiermit anschließend die angegebenen Kanäle um die angegebene Verzögerungszeit.

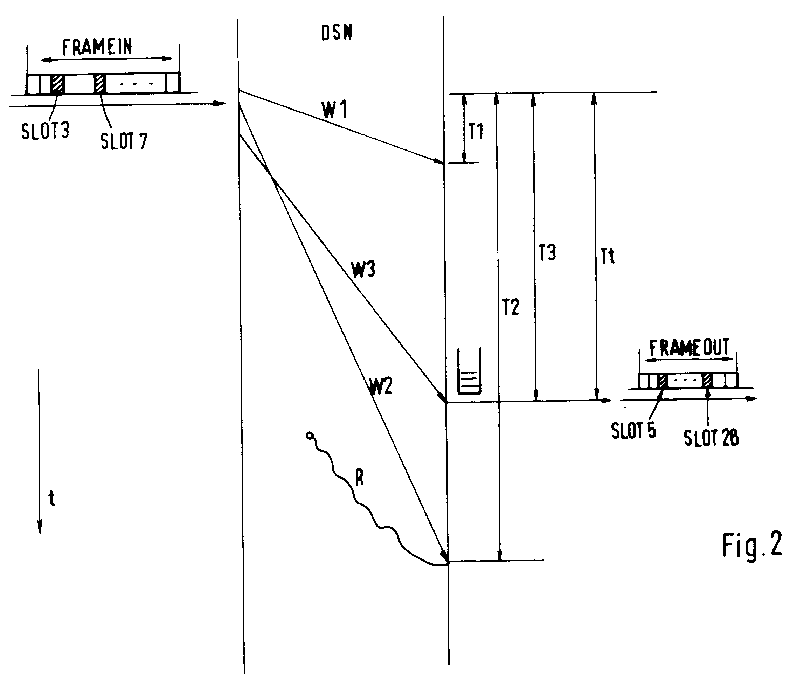

Der Ablauf des Verfahrens wird nun anhand von Fig. 2 erläutert:

Fig. 2 stellt eine zeitliche Darstellung der Abläufe in der Vermittlungseinrichtung SW dar.

In Fig. 2 sind die Zeitrahmen FRAMEIN und FRAMEOUT mit den Kanälen SLOT1 bis SLOT32, drei durch die Koppelanordnung DSN aufgebauten Kanäle W1 bis W3 und die Nachricht R dargestellt.

Von der Eingangseinrichtung INPUT werden für die aus zwei Kanälen bestehende Mehrkanalverbindung die drei Kanäle W1 bis W3 durch die Koppelanordnung DSN aufgebaut. Diese Wege verfügen jeweils über die Transitzeiten T1 bis T3 durch die Koppelanordnung DSN. Die Transitzeiten T1 bis T3 werden von der Meßeinrichtung MONIT mittels Zeitstempel ermittelt und an die Steuereinrichtung CONTR weitergeleitet. Der in der Steuereinrichtung CONTR implementierte Algorithmus wählt nun von diesen drei Kanälen die beiden mit der kürzesten Transitzeit, d.h. die Kanäle W1 und W3 aus. Durch das Senden der Nachricht R durch die Koppelanordnung DSN wird sodann der Kanal W2 wieder abgebaut und die Eingangseinrichtung INPUT von der getroffenen Auswahl unterrichtet. Diese ordnet sodann die Kanäle W1 und W3 den Kanälen SLOT3 und SLOT7, also den Kanälen der Mehrkanalverbindung zu. Die Steuereinrichtung CONTR berechnet weiter eine Differenzzeit, die der Differenz zwischen der Transitzeit T3 und der Transitzeit T1 entspricht. Diese Transitzeit und Angaben zu dem zu verzögernden Kanal W3 sendet die Steuereinrichtung CONTR sodann an die Speichereinrichtung MEM. Diese erbringt sodann eine Verzögerung des Weges W2 um diese Differenzzeit, so daß beide Kanäle der Mehrkanalverbindung in der Vermittlungseinrichtung SW um eine gleiche Zeit Tt verzögert werden, ihre Synchronität somit gewahrt bleibt. Wie aus der oberen Beschreibung zu entnehmen ist, erfordert das erfindungsgemäße Verfahren einen höheren Steuerungsaufwand und eine höhere Belastung des Koppel netzes bei der Verbindungsaufbauphase. Die Zeitdauer der Verbindungsaufbauphase ist jedoch um Größenordnungen kleiner als die Zeitdauer, während der die Verbindung anschließend aufgebaut bleibt. Somit fällt diese kurzzeitige höhere Belastung der Koppelanordnung DSN nicht ins Gewicht.

In einem zweiten Ausführungsbeispiel wird die Durchführung des erfindungsgemäßen Verfahrens in einer erfindungsgemäßen Vermittlungseinrichtung beschrieben, die über eine zentral gesteuerte Koppelanordnung verfügt.

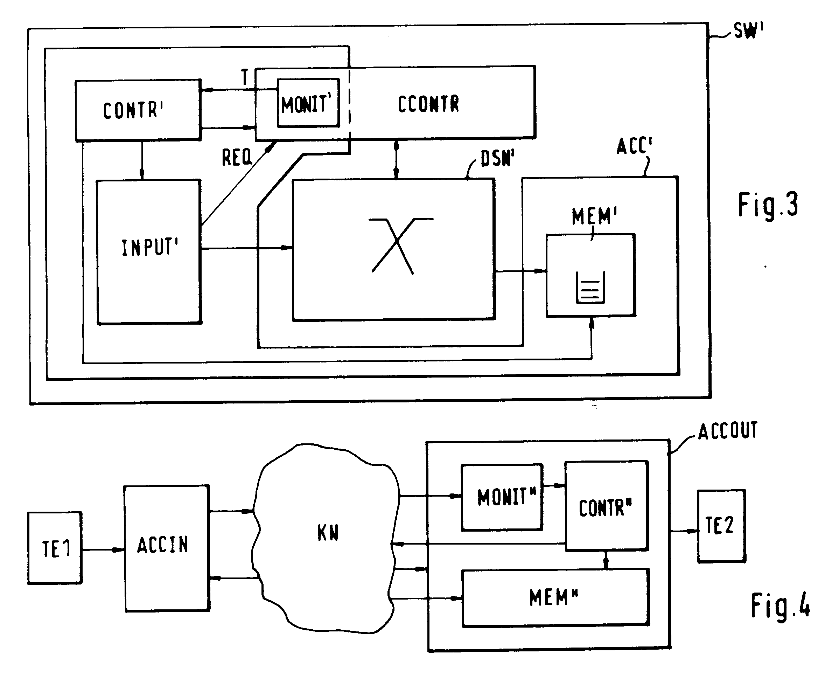

Fig. 3 zeigt eine Vermittlungseinrichtung SW' mit einer Zugangseinheit ACC' einer Koppelanordnung DSN' und einer Zentralsteuerung CCONTR. Bei der Koppelanordnung DSN' handelt es sich um eine zentral gesteuerte Koppelanordnung, die von der Zentralsteuerung CCONTR gesteuert wird. Für den Aufbau eines Weges in der Koppelanordnung DSN' wird eine entsprechende Anforderung REQ an die Zentralsteuerung CCONTR gesendet, die einen möglichen Weg durch die Koppelanordnung DSN' ermittelt und sodann die einzelnen Koppelelemente der Koppelanordnung DSN' entsprechend einstellt, damit dieser Weg aufgebaut wird.

Die Eingabeeinrichtung INPUT' ist wie die Eingabeeinrichtung INPUT aufgebaut, mit dem Unterschied, daß sie die Verbindungsanforderungen für die drei Kanäle nicht an die Koppelanordnung DSN', sondern an die Zentralsteuerung CCONTR sendet.

Die Zentralsteuerung CCONTR ist für den Aufbau der Wege in der Koppelanordnung DSN' verantwortlich. Hierzu verfügt sie über die notwendigen Daten, die den Zustand der Koppelanordnung DSN' beschreiben und ermittelt mittels dieser Daten auf Anforderungen Wege für Kanäle durch die Koppelanordnung DSN', deren Aufbau sie sodann durch spezielle Steuerbefehle an die Koppelelemente der Koppelanordnung DSN' steuert. Die Zentralsteuerung CCONTR simuliert so zuerst den Aufbau von Wegen durch die Koppelanordnung DSN', bevor sie deren Aufbau veranlaßt, d. h. sie berechnet den Aufbau anhand einer Nachbilden der Koppelanordung DSN' in der Zentralsteuerung CCONTR. Zusätzlich verfügt die Zentralsteuerung CCONTR über die Meßeinrichtung MONIT', die die Transitzeit T der diesen simulierten Wege zugeordneten Kanäle vor deren Aufbau bestimmt. Die Meßeinrichtung MONIT' sendet die so ermittelten Transitzeiten sodann an die Steuereinrichtung CONTR'.

Die Steuereinrichtung CONTR' empfängt die ermittelten Transitzeiten T der Kanäle und wählt aus diesen Kanälen entsprechend dem nach Fig. 1 für die Steuereinrichtung CONTR beschriebenen Algorithmus aus. Sodann veranlaßt sie durch Senden einer entsprechenden Steuerungsnachricht an die Eingabeeinrichtung INPUT' die Zuordnung dieser ausgewählten Kanäle als Kanäle der Mehrkanalverbindung und durch Senden einer entsprechenden Steuerungsnachricht an die Zentralsteuerung CCONTR den Aufbau nur dieser beiden ausgewählten Kanäle. Darüberhinaus veranlaßt die Steuereinrichtung CONTR' die Speichereinrichtung MEM' entsprechend dem zu Fig. 1 gesagtem die Kanäle um die zur Synchronisation notwendige Verzögerung zu verzögern.

Es ist auch möglich, eine Vermittlungseinrichtung mit solch einer zentral gesteuerten Koppelanordnung weitgehend wie nach Fig. 1 aufzubauen. Der einzige Unterschied zu der Funktionsweise zu Fig. 1 wäre, daß die Anforderungen zum Aufbau der drei Kanäle durch die Koppelanordnung nicht an die Koppelanordnung gesendet würden sondern an die Zentralsteuerung CCONTR.

Ein drittes Ausführungsbeispiel für die Durchführung des erfindungsgemäßen Verfahrens zum Aufbau einer Mehrkanalverbindung wird nun anhand einer Kommunikationsanordnung mit einer erfindungsgemäßen sendeseitgen Zugangseinrichtung und einer erfindungsgemäßen empfangsseitigen Zugangseinrichtung beschrieben.

Fig. 4 zeigt zwei Endgeräte TE1 und TE2, eine sendeseitige Zugangseinrichtung ACCIN, eine empfangsseitige Zugangseinrichtung ACCOUT und ein Kommunikationsnetz KN.

Bei den Endgeräten TE1 und TE2 handelt es sich um beliebige Endgeräte für Kommunikationsnetze, beispielsweise Fernsprecheinrichtungen, Bildtelefone, oder Computer. Es ist auch möglich, daß die Endgeräte TE1 oder TE2 von Zugangseinrichtungen zu weiteren Kommunikationsnetzen gebildet werden, so daß es sich bei ihnen beispielsweise um Router oder Bridges handelt. Die sendeseitige Zugangseinrichtung ACCIN ist analog zu der Eingabeeinrichtung INPUT nach Fig. 1 aufgebaut. Die empfangsseitige Zugangseinrichtung ACCOUT enthält eine Meßeinrichtung MONIT'', eine Steuereinrichtung CONTR'' und eine Speichereinrichtung MEM''. Diese Einrichtungen sind analog zu der Meßeinrichtung MONIT, der Steuereinrichtung CONTR und der Speichereinrichtung MEM nach Fig. 1 aufgebaut.

Bei dem Kommunikationsnetz KN handelt es sich um ein beliebiges verbindungsorientiertes Kommunikationsnetz für Sprache oder Daten. Auf eine entsprechende Signalisierung von seiten der sendeseitigen Zugangseinrichtung ACCIN wird eine Verbindung durch das Kommunikationsnetz KN aufgebaut. Der Aufbau dieser Verbindung und die Übertragungstechnik, auf dem der dieser Verbindung entsprechende Nutzkanal basiert, ist hierbei für die Erfindung ohne Bedeutung.

Von dem Endgerät TE1 wird an die sendeseitige Zugangseinrichtung ACCIN eine Anforderung zum Aufbau einer aus zwei Kanälen bestehenden Mehrkanalverbindung zu dem Endgerät TE2 signalisiert. Die sendeseitige Zugangseinrichtung ACCIN signalisiert darauf eine Anforderung zum Aufbau von drei Kanälen zu der empfangsseitigen Zugangseinrichtung ACCOUT an das Kommunikationsnetz KN. Der jeweiligen Anforderung für den Aufbau eines Kanals fügt sie hierbei eine Zeitmarke zu. Die drei Kanäle werden durch das Kommunikationsnetz KN aufgebaut und die drei Verbindungsanforderungen werden von der empfangsseitigen Zugangseinrichtung ACCOUT empfangen. Die Meßeinrichtung MONIT'' ermittelt aus den in diesen Anforderungen eingetragenen Zeitmarken die Transitzeiten der drei Kanäle und sendet sie an die Steuereinrichtung CONTR''. Diese wählt dann analog nach Fig. 1 zwei dieser Kanäle aus, stellt die Verzögerungszeit in der Speichereinrichtung MEM'' ein und sendet eine entsprechende Nachricht über das Kommunikationsnetz KN an die empfangsseitige Zugangseinrichtung, die eine Auslösung des nicht ausgewählten Kanals bewirkt und die empfangsseitige Zugangseinrichtung veranlaßt, die beiden ausgewählten Kanäle der Mehrkanalverbindung zuzuordnen.

Es ist auch möglich, daß die Übermittlung der Zeitmarke nicht mit dem Verbindungsaufbau erfolgt, sondern daß bei erfolgtem Verbindungsaufbau von der sendeseitigen Zugangseinrichtung entsprechende Zeit-Nachrichten über die aufgebauten Kanäle an die empfangsseitige Zugangseinrichtung gesendet werden. Der Abbau der nicht ausgewählten Kanäle erfolgt vorteilhafterweise von seiten der sendeseitigen Zugangseinrichtung ACCIN durch eine entsprechende Signalisierung an das Kommunikationsnetz KN. Die Meldung über die ausgewählten Kanäle kann entweder über einen Signalisierungskanal des Kommunikationsnetzes KN oder über einen der aufgebauten Nutz-Kanäle erfolgen.

## Patentansprüche

1. Verfahren zum Aufbau einer aus N Kanälen (SLOT1, SLOT2) bestehenden Mehrkanalverbindung, wobei das Verfahren folgende Schritte enthält:
- Ermitteln der Transitzeiten (T1, T2, T3) von mehr als N Kanälen (W1 bis W3),
- Auswahl von N Kanälen (W1, W3) aus den mehr als N Kanälen (W1 bis W3) mittels einem Algorithmus, der die ermittelten Transitzeiten (T1, T2, T3) als Eingangswerte verwendet und
- Zuordnen der ausgewählten N Kanäle (W1, W3) als Kanäle (SLOT1, SLOT2) der Mehrkanalverbindung.

2. Verfahren nach Anspruch 1, dadurch gekennzeichnet, daß die mehr als N Kanäle (W1 bis W3) zur Ermittlung ihrer Transitzeiten (T1 bis T3) aufgebaut werden und nicht ausgewählte Kanäle (W2) nach der Auswahl wieder abgebaut werden.

3. Verfahren nach Anspruch 2, dadurch gekennzeichnet, daß die Transitzeiten (T1 bis T3) mittels der Übertragung von Zeit-Nachrichten über die mehr als N Kanäle (W1 bis W3) ermittelt werden.

4. Verfahren nach Anspruch 1, dadurch gekennzeichnet, daß die Transitzeiten (T1 bis T3) durch Simulation des Verbindungsaufbaus ermittelt werden.

5. Verfahren nach Anspruch 1, dadurch gekennzeichnet, daß der Algorithmus diejenigen N Kanäle auswählt, zwischen denen die geringste Transitzeitdifferenz ermittelt wird.

6. Verfahren nach Anspruch 1, dadurch gekennzeichnet, daß der Algorithmus diejenigen N Kanäle (W1, W3) auswählt, für die die geringsten Transitzeiten (T1, T3) ermittelt werden.

7. Verfahren nach Anspruch 1, dadurch gekennzeichnet, daß die Mehrkanalverbindung von zwei oder mehr Gruppen verschiedenartige Kanäle gebildet wird und daß der Algorithmus die N Kanäle derart auswählt, daß die Transitzeiten der Kanäle einer ersten Gruppe wenn möglich größer als die Transitzeiten der Kanäle einer zweiten oder weiteren Gruppe sind.

8. Vermittlungseinrichtung (SW, SW') für ein Kommunikationsnetz mit einer Koppelanordnung (DSN; DSN') und einer Zugangseinheit (ACC; ACC') zu der Koppelanordnung (DSN; DSN'), wobei die Zugangseinheit (ACC; ACC') mit einer Einrichtung (MONIT; MONIT') zur Ermittlung von Transitzeiten (T1 bis T3; T) von Kanälen (W1 bis W3) durch die Koppelanordnung (DSN; DSN'), mit einer Eingangseinrichtung (INPUT, INPUT') und mit einer Steuereinrichtung (CONTR, CONTR') versehen ist, die Eingangseinrichtung (INPUT, INPUT') mit einer Einrichtung zum Zuordnen von Kanälen (W1 bis W3) der Koppelanordnung (DSN, DSN') zu einer Mehrkanalverbindung versehen ist und so ausgestaltet ist, daß sie beim Anfordern einer Mehrkanalverbindung mit N Kanälen die Ermittlung von Transitzeiten von mehr als N Kanälen durch die Einrichtung (MONIT, MONIT') zur Ermittlung von Transitzeiten bewirkt und die Steuereinrichtung (CONTR, CONTR') so ausgestaltet ist, daß sie N Kanäle (W1, W3) aus den mehr als N Kanälen (W1 bis W3) mittels eines Algorithmus auswählt, der die ermittelten Transitzeiten (T1 bis T3; T) als Eingangswerte verwendet und die Eingangseinrichtung (INPUT, INPUT') veranlaßt, die ausgewählten N Kanäle (W1, W3) der Mehrkanalverbindung zuzuordnen.

9. Vermittlungseinrichtung (SW) nach Anspruch 8, dadurch gekennzeichnet, daß die Koppelanordnung (DSN) eine selbst-wegesuchende Koppelanordnung ist und die Eingangseinrichtung (INPUT) die Ermittlung der Transitzeiten (T1 bis T3) der mehr als N Kanäle (W1 bis W3) dadurch bewirkt, daß sie der Koppelanordnung (DSN) den Aufbau von mehr als N Kanälen signalisiert.

10. Vermittlungseinrichtung (SW') nach Anspruch 8, dadurch gekennzeichnet, daß die Koppelanordnung (DSN') eine zentralgesteuerte Koppelanordung mit einer Zentralsteuerung (CCONTR) ist und die Eingangseinrichtung (INPUT') die Ermittlung der Transitzeiten (T1 bis T3) der mehr als N Kanäle (W1 bis W3) dadurch bewirkt, daß sie der Zentralsteuerung (CCONTR) eine Anforderung (REQ) der mehr als N Kanäle (W1 bis W3) signalisiert.

11. Kommunikationsnetz mit einer Zugangseinheit (ACC, ACC'), die mit einer Einrichtung zur Ermittlung von Transitzeiten (T1 bis T3; T) von Kanälen (W1 bis W3) durch die Koppelanordnung (DSN; DSN'), mit einer Eingangseinrichtung (INPUT, INPUT') und mit einer Steuereinrichtung (CONTR, CONTR') versehen ist, wobei die Eingangseinrichtung (INPUT, INPUT') mit einer Einrichtung zum Zuordnen von Kanälen (W1 bis W3) der Koppelanordnung (DSN, DSN') zu einer Mehrkanalverbindung versehen ist, die Eingangseinrichtung (INPUT, INPUT') so ausgestaltet ist, daß sie beim Anfordern einer Mehrkanalverbindung mit N Kanälen die Ermittlung von Transitzeiten (T1 bis T3; T) von mehr als N Kanälen durch die Einrichtung (MONIT) zur Ermittlung von Transitzeiten (T1 bis T3; T) bewirkt und die Steuereinrichtung (CONTR) so ausgestaltet ist, daß sie N Kanäle (W1, W2) aus den mehr als N Kanälen (W1 bis W3) mittels eines Algorithmus auswählt, der die ermittelten Transitzeiten (T1 bis T3; T) als Eingangswerte verwendet und die Eingangseinrichtung (INPUT, INPUT') veranlaßt, die ausgewählten N Kanäle (W1, W2) der Mehrkanalverbindung zuzuordnen.

12. Sendeseitige Zugangseinrichtung (ACCIN) zu einem Kommunikationsnetz (KN) mit einer Einrichtung zum Zuordnen von in dem Kommunikationsnetz (KN) aufgebauten Kanälen zu einer Mehrkanalverbindung und mit einer Steuereinrichtung, die so ausgestaltet ist, daß sie beim Anfordern einer Mehrkanalverbindung mit N Kanälen den Aufbau von mehr als N Kanälen durch das Kommunikationsnetz (KN) zu einer empfangsseitigen Zugangseinrichtung (ACCOUT) signalisiert und die Ermittlung der Transitzeiten dieser mehr als N Kanäle durch die empfangsseitige Zugangseinrichtung (ACCOUT) bewirkt.

13. Empfangsseitige Zugangseinrichtung (ACCOUT) zu einem Kommunikationsnetz (KN) mit einer Einrichtung (MONIT'') zur Ermittlung von Transitzeiten von durch das Kommunikationsnetz (KN) aufgebauten Kanälen und mit einer Steuereinrichtung (CONTR''), die so ausgestaltet ist, daß sie den Aufbau von mehr als N Kanälen einer Mehrkanalverbindung von einer sendeseitigen Zugangseinrichtung (ACCIN) erkennt, daß sie die Ermittlung der Transitzeiten dieser Kanäle veranlaßt, daß sie N Kanäle aus den mehr als N Kanäle mittels eines Algorithmus auswählt, der die ermittelten Transitzeiten als Eingangswerte verwendet und daß sie die sendeseitige Zugangseinrichtung (ACCIN) veranlaßt, nur die ausgewählten N Kanäle der Mehrkanalverbindung zuzuordnen.

14. Vermittlungseinrichtung für ein Kommunikationsnetz mit einer Koppelanordnung und einer Zugangseinheit zu der Koppelanordnung, wobei die Zugangseinheit mit einer Einrichtung zur Ermittlung von Transitzeiten von Kanälen durch die Koppelanordnung, mit einer Eingangseinrichtung und mit einer Steuereinrichtung versehen ist, die Eingangseinrichtung mit einer Einrichtung zum Zuordnen eines Kanals durch die Koppelanordnung zu einer Einkanalverbindung versehen ist und so ausgestaltet ist, daß sie beim Anfordern einer Einkanalverbindung die Ermittlung von Transitzeiten von mehr als einem Kanal durch die Einrichtung zur Ermittlung von Transitzeiten bewirkt und die Steuereinrichtung so ausgestaltet ist, daß sie einen Kanal aus den mehreren Kanälen mittels eines Algorithmus auswählt, der die ermittelten Transitzeiten als Eingangswerte verwendet und die Eingangseinrichtung veranlaßt, den ausgewählten Kanal der Einkanalverbindung zuzuordnen.
